# EUROPEAN PATENT SPECIFICATION

(11) **EP 1 997 289 B1**
(45) Date of publication and mention of the grant of the patent: **12.09.2012**
(21) Application number: 07758928.1
(22) Date of filing: 20.03.2007
(51) Int. Cl.: H04B 7/04, H04W 52/16, H04L 27/26, H04W 52/32

(54) **UPLINK CHANNEL ESTIMATION USING A SIGNALLING CHANNEL**
AUFWÄRTSKANALSCHÄTZUNG UNTER VERWENDUNG EINES ZEICHENKANALS
ESTIMATION DE CANAL DE LIAISON ASCENDANTE AU MOYEN D'UN CANAL DE SIGNALISATION

(30) Priority: 20.03.2006 US 784583 P
(43) Date of publication of application: 03.12.2008
(73) Proprietor: QUALCOMM Incorporated, San Diego, CA 92121 (US)
(72) Inventor: KIM, Byoung-hoon, San Diego, California 92122 (US); MALLADI, Durga, Prasad, San Diego, California 92128 (US); XU, Hao, San Diego, California 92121-1714 (US)
(74) Representative: Heselberger, Johannes
(86) International application number: PCT/US2007/064426
(87) International publication number: WO 2007/109679

(56) References cited:
- EP-A2- 1 376 895
- WO-A-2004/038986
- WO-A-2005/112323
- WO-A-2006/010159
- US-A1- 2002 111 142
- US-A1- 2003 072 452
- US-A1- 2003 228 876
- US-A1- 2004 179 627
- US-A1- 2006 056 451
- US-B1- 6 208 669
- 3GPP TR 25.814 V1.1.1 3RD GENERATION PARTNERSHIP PROJECT;TECHNICAL SPECIFICATION GROUP RADIO ACCESS NETWORK; PHYSICAL LAYER ASPECTS FOR EVOLVED UTRA (RELEASE 7), [Online] 28 February 2006 (2006-02-28), XP002450131 Retrieved from the Internet: URL:http://www.3gpp.org/ftp/Specs/archive/ 25_series/25.814/25814-111.zip> [retrieved on 2007-09-05]
- MORELLI M ET AL: "Estimation of channel statistics for iterative detection of OFDM signals" COMMUNICATIONS, 2004 IEEE INTERNATIONAL CONFERENCE ON PARIS, FRANCE 20-24 JUNE 2004, PISCATAWAY, NJ, USA,IEEE, 20 June 2004 (2004-06-20), pages 847-851, XP010710061 ISBN: 0-7803-8533-0
- VISWANATH P ET AL: "Opportunistic beamforming using dumb antennas" IEEE TRANSACTIONS ON INFORMATION THEORY IEEE USA, vol. 48, no. 6, June 2002 (2002-06), pages 1277-1294, XP002314708 ISSN: 0018-9448

## Description

### BACKGROUND

### I. Field

The present disclosure relates generally to communication, and more specifically to techniques for performing channel estimation.

### II. Background

A wireless multiple-access system may include Node Bs (or base stations) that communicate with user equipments (UEs). Each UE may communicate with one or more Node Bs via transmissions on the downlink and uplink. The downlink (or forward link) refers to the communication link from the Node Bs to the UEs, and the uplink (or reverse link) refers to the communication link from the UEs to the Node Bs.

The system supports multiple-input multiple-output (MIMO) transmission on the downlink and/or uplink. Such a concept is described, for example, in 3GPP TR 25.814 V1.1.1 chapter 9.1.1.4 and in US 2004/0179627 A1. On the uplink, one or more UEs may send transmissions from multiple (T) transmit antennas to multiple (R) receive antennas at a Node B. A MIMO channel formed by the T transmit antennas and .R receive antennas may be decomposed into C spatial channels, where C ≤ min {T, R}. Improved performance (e.g., higher throughput and/or greater reliability) may be achieved by exploiting the spatial channels formed by the multiple transmit and receive antennas.

Any number of UEs may desire to transmit data on the uplink to a. Node B at any given moment. Good performance may be achieved by selecting one or more "compatible" UEs whose transmissions Will interference with one another as little as possible at the Node B. Compatibility may be determined by (i) estimating the channel response from each transmit antenna of each UE desiring to transmit data on the uplink to each receive antenna at the Node B and (ii) selecting a set of transmit antennas with channel responses that are most orthogonal to one another. The channel response for each transmit antenna may be estimated based on a pilot sent from that transmit antenna. Each UE desiring to transmit data on the uplink may be allocated radio resources to transmit pilot from each antenna at that UE. However, a large amount of uplink resources may be consumed for uplink pilots used for channel estimation to select compatible UEs for MIMO transmission on the uplink.

There is therefore a need in the art for techniques to efficiently estimate uplink channel responses for UEs without consuming excessive uplink resources.

### SUMMARY

This need is fulfilled by the subject matter of the independent claims. Techniques for efficiently deriving uplink channel estimates without consuming much additional uplink resources are described herein. In an aspect, a UE sends a request for uplink resources on a request channel (REQCH) whenever the UE desires to transmit data on the uplink. The UE sends the REQCH from multiple antennas either simultaneously or in a time-switched manner, e.g., from one antenna in each time interval. The UE also sends the REQCH on a set of subcarriers that are distributed across one or more subbands or the entire system bandwidth. The UE may send REQCH data on data subcarriers and pilot on pilot subcarriers.

A Node B may receive the request sent on the REQCH by the UE and may estimate the complex channel gains for the pilot subcarriers based on received pilot symbols. The Node B may coherently demodulate received data symbols from the data subcarriers based on the channel gain estimates. The Node B may also estimate the complex channel gains for the data subcarriers based on demodulated data symbols, which should be reliable since the UE may be scheduled for uplink transmission only if the request from the UE can be correctly decoded by the Node B. The Node B may then derive a channel estimate for each antenna at the UE based on the channel gain estimates for the pilot and data subcarriers used for the REQCH. The Node B may use the channel estimates for the multiple antennas at the UE for various purposes such as selection of UEs for uplink MIMO transmission, subband scheduling, rate selection, etc.

Various aspects and features of the disclosure are described in further detail below.

### BRIEF DESCRIPTION OF THE DRAWINGS

FIG. 1 shows a wireless communication system.

FIGS. 2A to 2C show subcarrier structures for LFDM, IFDM, and EFDM.

FIGS. 3A and 3B show two data and pilot structures.

FIG. 4 shows uplink transmission of signaling and data via two antennas.

FIGS. 5A to 5C show three data and pilot patterns for the REQCH.

FIGS. 6 and 7 show a process and an apparatus, respectively, for a UE.

FIGS. 8 and 9 show a process and an apparatus, respectively, for a Node B.

FIG. 10 shows a block diagram of a Node B and two UEs.

FIG. 11 shows a block diagram of a transmit (TX) data and signaling processor.

FIG. 12 shows a block diagram of a receive (RX) spatial processor and an RX data and signaling processor.

### DETAILED DESCRIPTION

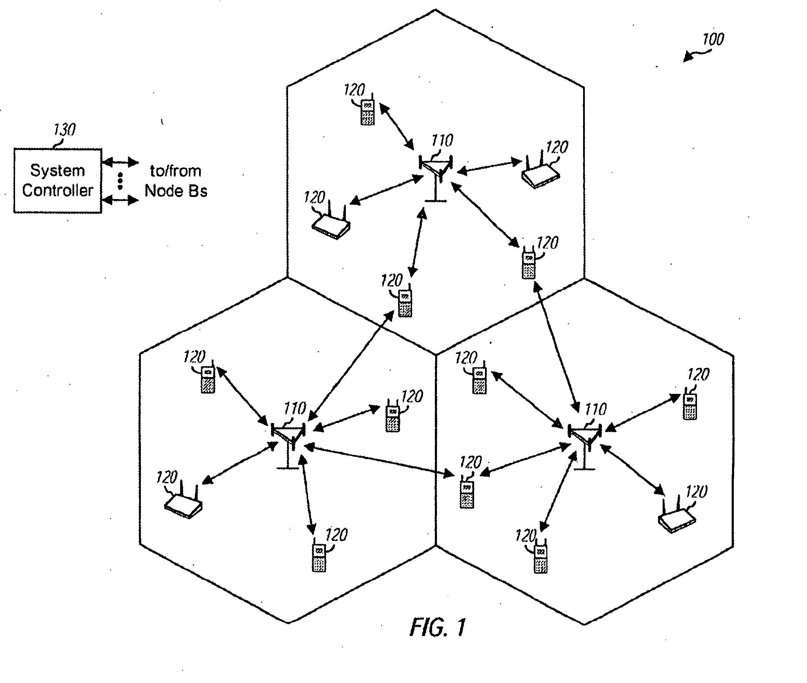

**FIG. 1** shows a wireless communication system 100 with multiple Node Bs 110 and multiple UEs 120. A Node B is generally a .fixed station that communicates with the UEs and may also be referred to as an evolved Node B (eNode B), a base station, an access point, etc. Each Node B 110 provides communication coverage for a particular geographic area and supports communication for the UEs located within the coverage area. The term "cell" can refer to a Node B and/or its coverage area depending on the context in which the term is used. A system controller 130 may couple to Node Bs 110 and provide coordination and control for these Node Bs. System controller 130 may be a single network entity or a collection of network entities, e.g., an Access Gateway (AGW), a Radio Network Controller (RNC), etc.

UEs 120 may be dispersed throughout the system, and each UE may be stationary or mobile. A UE may also be referred to as a mobile station, a mobile equipment, a terminal, an access terminal, a subscriber unit, a station, etc. A UE may be a cellular phone, a personal digital assistant (PDA), a wireless communication device, a handheld device, a wireless modem, a. laptop computer, etc.

The techniques described herein may be used for various wireless communication systems such as Code Division multiple Access (CDMA) systems, Time Division Multiple Access (TDMA) systems, Frequency Division Multiple Access (FDMA) systems, Orthogonal FDMA (OFDMA) systems, Single-Carrier FDMA (SC-FDMA) systems, etc. A CDMA system may implement a radio technology such as Universal Terrestrial Radio Access (UTRA), Evolved UTRA (E-UTRA), cdma2000, etc. UTRA includes Wideband CDMA (W-CDMA) and Time Division-Synchronous CDMA (TD-SCDMA). cdma2000 covers IS-2000, IS-95 and IS-856 standards. A TDMA system may implement a radio technology such as Global System for Mobile Communications (GSM). An OFDMA system may implement a radio technology such as Long Term Evolution (LTE) (which is part of E-UTRA), IEEE 802.20, IEEE 802.16, Flash-OFDM®, etc. UTRA, E-UTRA, GSM and LTE are described in documents from an organization named "'3rd Generation Partnership Project" (3GPP). cdma2000 .is described in documents from an organization named "3rd Generation Partnership Project 2" (3GPP2). These various radio technologies and standards are known in the art. For clarity, certain aspects of the techniques are described below for LTE, and 3GPP terminology is used in much of the description below.

LTE utilizes orthogonal frequency division multiplexing (OFDM) on the downlink and single-carrier frequency division multiplexing (SC-FDM) on the uplink. OFDM and SC-FDM partition the system bandwidth into multiple (K) orthogonal subcarriers, which are also commonly referred to as tones, bins, etc. Each subcarrier may be modulated with data. In general, modulation symbols are sent on subcarriers in the frequency domain with OFDM and in the time domain with SC-FDM SC-FDM includes (i) localized FDM (LFDM) which transmits data on contiguous subcarriers, (ii) interleaved FDM (IFDM) which transmits data on subcarriers that are distributed across the system bandwidth, (iii) enhanced FDM (EFDM) which transmits data on multiple groups of contiguous subcarriers, and (iv) other variants of SC-FDM.

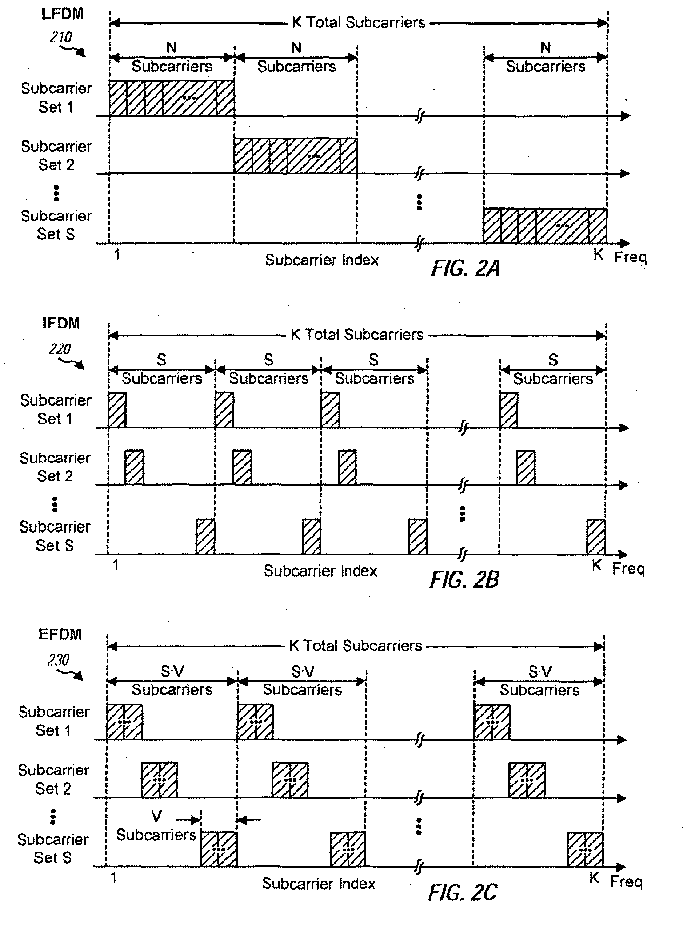

**FIG. 2A** shows a subcarrier structure 210 for LFDM. The overall system bandwidth of BW MHz is partitioned into multiple (K) orthogonal subcarriers thai are given indices of 1 through K, where K may be any integer value. The spacing between adjacent subcarriers is BW/K MHz. A subset of the K total subcarriers may be usable for transmission. The remaining subcarriers, which are typically located at the two band edges, may serve as guard subcarriers to allow the system to meet spectral mask requirements. For simplicity, the following description assumes that all K total subcarriers are usable for transmission. For subcarrier structure 210, the K total subcarriers are arranged into S non-overlapping sets, with each set containing N contiguous subcarriers, where S > 1, N > 1 and K = S·N.

**FIG. 2B** shows a subcarrier structure 220 for IFDM. For subcarrier structure 220, the K total subcarriers are arranged into S non-overlapping sets, with each set containing N subcarriers that are uniformly distributed across the K total subcarriers, where K = S·N. Consecutive subcarriers in each set are spaced apart by S subcarriers.

**FIG. 2C** shows a subcarrier structure 230 for EFDM. For subcarrier structure 230, the K total subcarriers are arranged into S non-overlapping sets, with each set containing G groups of subcarriers that are distributed across the K total subcarriers. For each set, the G groups are spaced apart by S·V subcarriers, and each group contains V consecutive subcarriers, where N = G·V.

In general, a subcarrier structure may include any number of non-overlapping subcarrier sets. Each subcarrier set may contain any number of subcarriers and any one of the K total subcarriers. The subcarrier sets may contain the same or different numbers of subcarriers. For each set, the subcarriers in the set may be adjacent to one another as shown in FIG. 2A, uniformly distributed across the system band width as shown in FIG. 2B, arranged in multiple groups that may be distributed across the system bandwidth as shown in FIG. 2C, or arranged in other manners. Each subcarrier set may be assigned to one or more UEs. The subcarrier structures in FIGS. 2A to 2C may also be used for OFDM.

The K total subcarriers may also be divided into multiple subbands. Each subband may include Q consecutive subcarriers, where Q may be any integer value. In one design, Q is an integer multiple of N, and each subband includes multiple sets of consecutive subcarriers. A subband may also correspond to a particular bandwidth, e.g., one MHz of bandwidth.

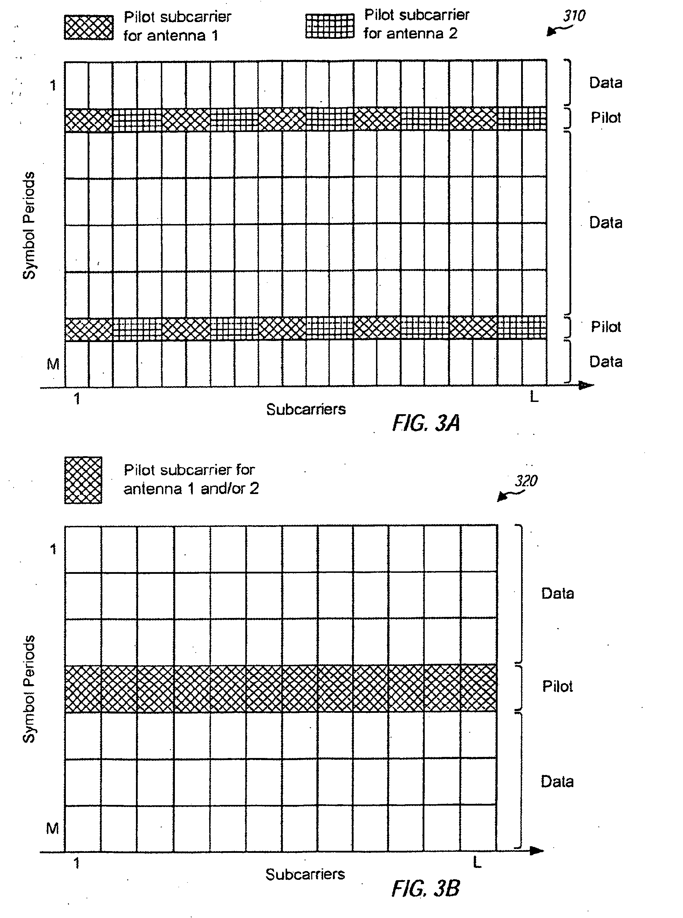

**FIG. 3A** shows a design of a data and pilot structure 310 that may be used for OFDM and SC-FDM. In this design, a time frequency block covers a set of L subcarriers in a slot of M symbol periods. A slot may also be referred to as a transmission time interval (TTI), etc. The L subcarriers may be adjacent to one another for LFDM, distributed across the K total subcarriers for IFDM, or distributed in groups for EFDM. In the example shown in FIG. 3A, the time frequency block covers L=20 subcarriers in M = 8 symbol periods, with six symbol periods being used for data and two symbol periods being used for pilot. In general, the M symbol periods may have equal or different durations. In the design shown in FIG. 3A, data is sent in a long symbol period, and pilot is sent in a short symbol period that is half the duration of a long symbol period. In this design, there are L subcarriers in each long symbol period but only L/2 subcarriers in each short symbol period. A subcarrier used to send data is referred to as a data subcarrier, and a subcarrier used to send pilot is referred to as a pilot subcarrier.

As shown in FIG. 3A, different antennas may be assigned different pilot subcarriers. Pilots may be transmitted simultaneously from these antennas using frequency division multiplexing (FDM).

**FIG. 3B** shows a design of a data and pilot structure 320 that may also be used for OFDM and SC-FDM. In this design, a time frequency block covers a set of L subcarriers in a slot of M symbol periods of equal duration. In the example shown in FIG. 3B, the time frequency block covers L = 12 subcarriers in M = 7 symbol periods, with six symbol periods being used for data and one symbol period being used for pilot. Pilots may be transmitted simultaneously from one or more antennas on the same pilot subcarriers using code division multiplexing (CDM). For example, different antennas may be assigned different orthogonal sequences, e.g., different Chu sequences.

FIGS. 3A and 3B show two examples of partitioning time frequency resources into blocks. Other structures may also be used to send data and pilot. The transmission timeline may also be partitioned into subframes. Each subframe may include a predetermined number of slots, e.g., two slots. The transmission timeline may also be partitioned into other time units.

A. Node B may support single-user MIMO (SU-MIMO) and/or multi-user MIMO (MU-MIMO). On the uplink, SU-MIMO refers to MIMO transmission from a single UE on a given time frequency block. MU-MIMO refers to MIMO transmission from multiple UEs on the same time frequency block. MU-MIMO is also referred to as Spatial Division Multiple Access (SDMA). SU-MIMO may be used for some time frequency blocks, and MU-MIMO may be used for other time frequency blocks. The Node B may also support space-time transmit diversity (STTD), space-frequency transmit diversity (SFTD), and/or other transmission schemes. These various transmit diversity schemes may be considered as special modes of MIMO.

A given time frequency block may be assigned to one or more UEs. A single UE may send multiple data symbols on a given data subcarrier via multiple transmit antennas at the UE multiple UEs may also send multiple data symbols on the same data subcarrier via different transmit antennas at these UEs.

FIG. 3A shows an example assignment of data and pilot subcarriers in one time frequency block to two UEs for MU-MIMO. In this example, the two UEs may share the L data subcarriers in each long symbol period. Each UE may be assigned half of the pilot subcarriers in each short symbol period. The L/4 pilot subcarriers assigned to each UE in one short symbol period may be distributed across the time frequency block, as shown in FIG. 3A. Each UE may be assigned the same pilot subcarriers (as shown in FIG. 3A) or different pilot subcarriers (not shown in FIG. 3A) in the two short symbol periods. The time frequency block may also be assigned to a single UE with two transmit antennas for SU-MIMO. In this case, each antenna may be assigned half of the pilot subcarriers in each short symbol period.

In general, a time frequency block may be assigned to any number of UEs for MU-MIMO or to a single UE with any number of transmit antennas for SU-MIMO. For MU-MIMO, different UEs may share the some data subcarriers but may be assigned different pilot subcarriers (e.g., as shown in FIG. 3A) or may share the same pilot subcarriers (e.g., as shown in FIG. 3B), For SU-MIMO, different transmit antennas at a single UE may share the same data subcarriers but may be assigned different pilot subcarriers (e.g., as shown in FIG. 3A) or may share the same pilot subcarriers (e.g., as shown in FIG. 3B). For both SU-MIMO and MU-MIMO, the Node B may derive a channel estimate for each UE antenna across frequency and possibly time based on the pilot subcarriers assigned to that UE antenna. For simplicity, much of the description below assumes UEs with two antennas.

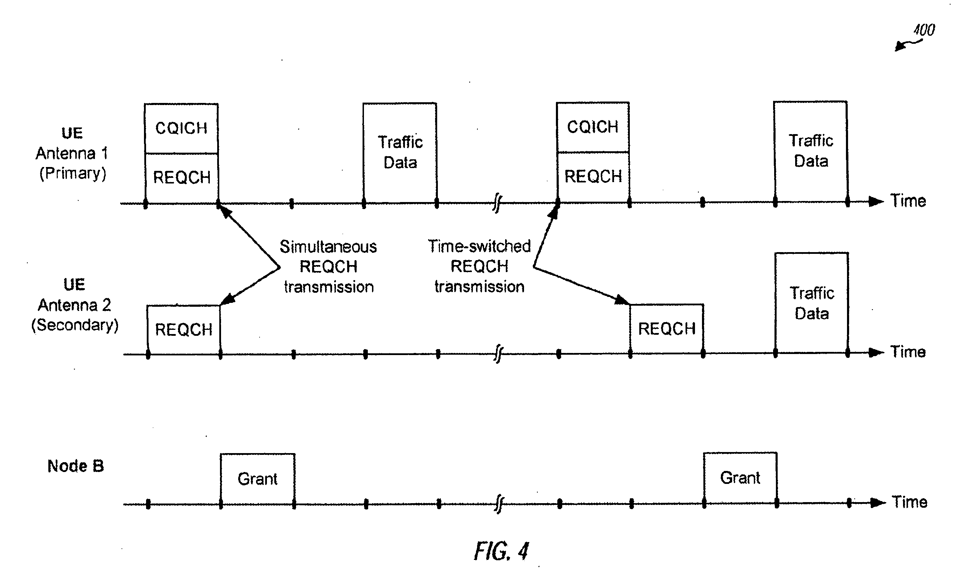

**FIG. 4** shows a design of an uplink transmission scheme 400 for a UE with two transmit antennas 1 and 2. Transmit antenna 1 may be designated as a primary antenna, and transmit antenna 2 may be designated as a secondary antenna. In this design, the UE may periodically estimate the downlink channel quality for the Node B, determine channel quality indicator (CQI) for the downlink, and send the CQI on a CQI channel (catch) to the Node B. For example, the UE may send a CQI report every 20 subframes.

The UE may also send a request for uplink resources on a request channel (REQCH) to the Node B whenever the UE desires to transmit data on the uplink. In general, a request channel may be any channel used to send request for resources for transmission. The request may include any information such as the number of antennas at the UE, data queue size for the UE, the amount of resources being requested, etc. The Node B may receive the request from the UE, assign uplink resources (e.g., one or more time frequency blocks) to the UE, and send a grant of the assigned uplink resources on a shared downlink control channel (SDCCH) to the UE. The UE may then transmit data on the assigned uplink resources.

In one design, the UE may transmit the CQICH periodically via the primary antenna. The Node B may perform power control of the link for the primary antenna based on the CQICH and may adjust the transmit power of the primary antenna to a desired level, e.g., to achieve a target received signal-to-noise ratio (SNR). The Node B may also use the CQIs received on the CQICH to select suitable data rates for downlink transmission to the UE.

The UE may transmit the REQCH via one or more antennas in various manners. The UE may transmit the REQCH from multiple antennas simultaneously, e.g., as shown in FIG. 4. The UE may also transmit the REQCH from multiple antennas in a time-switched manner, e.g., from one antenna in one time interval, then from another antenna in another time interval, etc., as also shown in FIG. 4. In general, a time interval may correspond to a symbol period, a slot, a subframe, etc. The UE may also transmit the REQCH from multiple antennas in other manners, e.g., from the primary antenna more often than the secondary antenna. The UE may transmit the REQCH on the entire system bandwidth. The transmission on the REQCH may provide the Node B with a delta power spectral density (PSD) between the REQCH and the CQICH. The REQCH and CQICH may be transmitted in the same time intervals (e.g., as shown in FIG. 4) and/on in different time intervals (not shown in FIG. 4). For example, the CQICH may be transmitted at regular intervals whereas the REQCH may be transmitted whenever the UE desires to send data on the uplink.

A. UE may have a single power amplifier (PA) that may be coupled to one of multiple antennas at the UE. This single-PA UE may be able to transmit from only one antenna at any given moment. A UE may also have multiple PAs for multiple antennas, e.g., one PA per antenna. This multi-PA. UE may be able to transmit from multiple antennas at the same time.

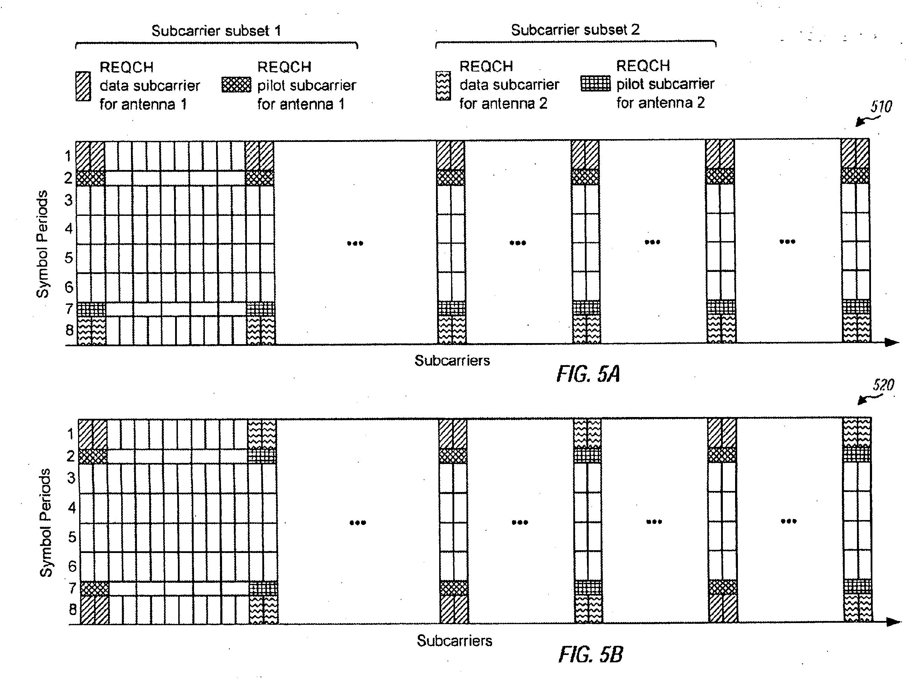

**FIG. 5A** shows a design of a data and pilot pattern 510 for transmitting the REQCH from multiple antennas in a time-switched manner by a UE with a single PA or multiple PAs. Pattern 510 is based on the data and pilot subcarriers described in FIG. 3A. The UE may transmit the REQCH on a set of data and pilot subcarriers. These data and pilot subcarriers are distributed across the system bandwidth (or the K total subcarriers) to achieve frequency diversity for the REQCH and to allow the Node B to estimate the channel response across the entire system bandwidth. Alternatively, the data and pilot subcarriers may be distributed across a portion of the system bandwidth, e.g., one or few subbands.

In the design shown in FIG. 5A, the UE may transmit REQCH data on data subcarriers from antenna 1 in symbol period 1, REQCH pilot on pilot subcarriers from antenna 1 in symbol period 2, REQCH pilot on pilot subcarriers from antenna 2 in symbol period 7, and REQCH data on data subcarriers from antenna 2 in symbol period 8. The UE may thus transmit either REQCH data or pilot from a single antenna in any given symbol period.

**FIG. 5B** shows a design of a data and pilot pattern 520 for transmitting the REQCH from multiple antennas simultaneously by a UE with multiple PAs. Pattern 520 is also based on the data and pilot subcarriers described in FIG. 3A. The UE may transmit the REQCH on a set of data and pilot subcarriers that may be distributed across all or part of the system bandwidth. This set of data and pilot subcarriers may be divided into two subsets. The first subset may contain half of the data and pilot subcarriers in the set, and the second subset may contain the other half of the data and pilot subcarriers in the set. In the design shown in FIG. 5B, the UE may transmit REQCH data and pilot on the first subset of subcarriers from antenna 1 and on the second subset of subcarriers from antenna 2 in symbol periods 1 and 2. The UE may transmit REQCH data and pilot on the first subset of subcarriers from antenna 1 and on the second subset of subcarriers from antenna 2 in symbol periods 7 and 8. The UE may transmit either REQCH data or pilot from both antennas in any given symbol period.

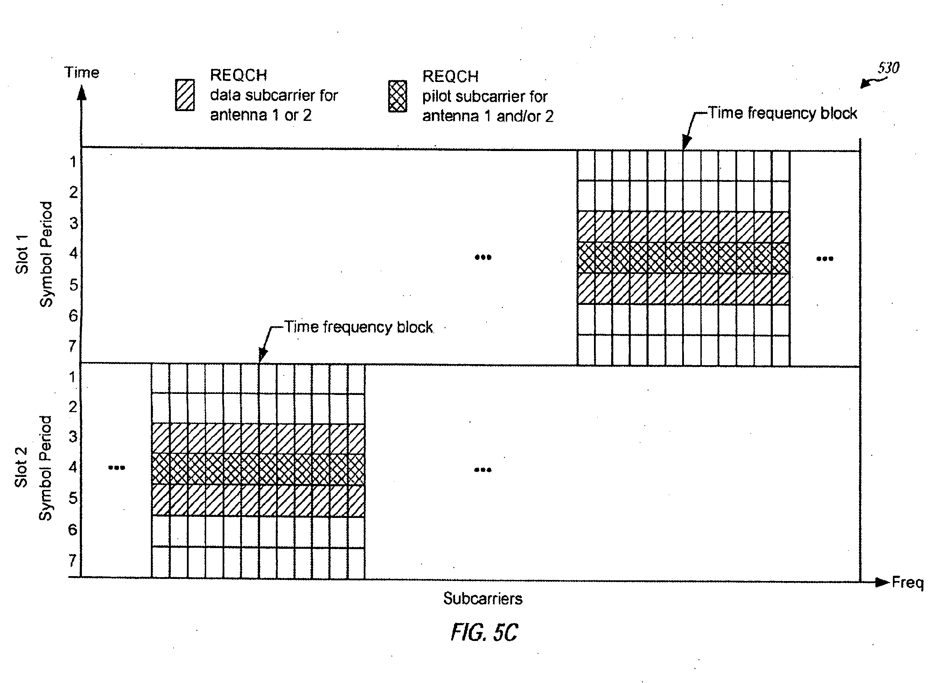

**FIG. 5C** shows a design of a data and pilot pattern 530 for transmitting the REQCH from multiple antennas simultaneously by a UE with multiple PAs. Pattern 530 is based on the data and pilot subcarriers described in FIG. 3B. the UE may transmit the REQCH on one or more time frequency blocks in one or more slots. For example, the UE may transmit the REQCH on two time frequency blocks in two slots of a subframe, with the two time frequency blocks being located in different parts of the system bandwidth. In general, the UE may transmit the REQCH on any number of time frequency blocks, which may hop across frequency in any manner. In each time frequency block, the UE may transmit REQCH pilot on the pilot subcarriers and may transmit REQCH data on two data subcarriers on both sides of each pilot subcarrier.

FIGS. 5A to 5C show three example data and pilot patterns for transmitting the REQCH from two antennas. The REQCH may also be transmitted in other manners, based on other data and pilot patterns, and/or from different numbers of antennas. Furthermore, only data may be sent on the REQCH, or both data and pilot may be sent on the RETCH.

In general, the number of data subcarriers to use for the REQCH may be dependent on the amount of information in a request sent on the REQCH. The pilot subcarriers may be used to provide a reference, which may be used for coherent demodulation of the data subcarriers. The data and pilot subcarriers may be arranged in clusters, with each cluster including one or more data subcarriers and one or more pilot subcarriers. In the designs shown in FIGS. 5A to 5C, each cluster includes two data subcarriers and one pilot subcarrier. REQCH data and pilot may be sent from the same transmit antenna in each cluster. A channel gain estimate may be derived from the pilot subcarrier in each cluster and used for coherent demodulation of the data subcarriers in that cluster.

A UE may transmit the REQCH on time frequency resources that may be shared with other UEs, e.g., in similar manner as a random access channel. The REQCH transmission from the UE may then collide with REQCH transmissions from other UEs. The UE may select different time frequency resources for different REQCH transmissions in order to avoid perpetual collisions with other UEs. The System may also allocate a sufficient amount of shared resources for the REQCH in order to achieve an acceptable rate of collisions for the REQCH transmissions.

A UE may be assigned dedicated time frequency resources for transmitting the REQCH and may then be able to avoid collisions with other UEs. The UE may send a designated codeword on the CQICH to indicate that the UE desires to transmit the REQCH. The Node B may then assign dedicated resources to the UE upon receiving this codeword on the CQICH from the UE. Different UEs may be assigned different time frequency resources for transmitting the REQCH. Each UE may transmit its request on its assigned time frequency resources whenever that UE desires to transmit data on the uplink. Any number of UEs may transmit requests on the REQCHs at any given moment.

The Node B may receive the REQCH from each UE and may estimate the complex channel gains of the pilot subcarriers for that UE based on the received pilot symbols. The Node B may then coherently demodulate the data subcarriers for each UE based on the channel gain estimates derived from the pilot subcarriers for that UE The Node B may also estimate the complex channel gains of the data subcarriers for each UE based on the demodulated data symbols. Since a UE may be scheduled for uplink transmission only if the request from the UE can be correctly decoded by the Node B, the decoded request from the UE may be used to reconstruct the data symbols sent by the UE for the request. The reconstructed data symbols would be reliable and may be used as additional pilot symbols for channel estimation. The Node B may derive a channel estimate for each antenna at each UE based on the channel gain estimates for the pilot and data subcarriers used for the REQCH by that. UE A MIMO channel estimate for each UE may comprise channel estimates for all antennas at that UE.

The Node B may use the REQCH for one or more of the following:
- UE selection for SU-MIMO and MU-MIMO - select a single UE for SU-MIMO operation or multiple UEs for MU-MIMO operation on the same time frequency resources, e.g., a time frequency block,
- Subband scheduling - select a subband for a UE,
- Rate selection - select one or more rates for each scheduled UE, and
- Power control and reference power level adjustment - adjust transmit power of each UE.

The REQCH may be used for UE selection for MIMO transmission. The MIMO channel response for each UE may be estimated based on the REQCH sent by that UE. The MIMO channel estimates for different UEs may be evaluated to select compatible UEs for MIMO transmission on the uplink. For example, two UEs may be selected for MU-MIMO operation on a given time frequency block as follows. Different pairs of antennas for different UEs may be identified. The channel estimates for each antenna pair may be evaluated to determine the rank and the achievable data. rates for the MIMO channel formed with that antenna pair. The rank and data rates may be dependent on the amount of onthogonality between the channel estimates for the pair of antennas. The pair of antennas with channel estimates that are most orthogonal may be selected, and the UEs with these antennas may be scheduled for uplink transmission on the same time frequency block The MIMO channel estimates for the UEs may also be used for antenna selection for SU-MIMO and for transmit diversity schemes in addition to MU-MIMO. In general, a given UE may be scheduled for uplink transmission on only the primary antenna, or only the secondary antenna, or both antennas. A. given time frequency block may also be assigned to a single UE for SU-MIMO if this single UE can achieve better performance than all antenna pairs evaluated for MU-MIMO.

The REQCH may be used for subband scheduling. Wideband channel estimates may be derived for each UE if the data and pilot subcarriers used for the REQCH are distributed across the system bandwidth. The wideband channel estimates for each UE may be used for subband scheduling to select a suitable subband for that UE. The channel estimates for a given UE may vary widely across the system bandwidth due to frequency selective fading, which may result from multipath in the wireless environment. The UE may be scheduled for uplink transmission on a subband with high channel gains and/or high received SNR.

The REQCH may be used for rate selection. The Node B may estimate the received SNR of each antenna at each UE scheduled for uplink transmission. The SNR may be estimated based on received pilot symbols from the RECQGH, received data symbols from the REQCH, and/or received pilot symbols and received data symbols from other uplink transmissions. The Node B may select a data rate for each antennas at each scheduled UE based on the SNR estimates.

The REQCH may also be used for power control and reference power level adjustment The transmit power of the CQICH may be adjusted via power control to achieve a target SNR. The REQCH may be sent with a fixed power relationship to the CQICH. The SNR of the REQCH may then be controlled via the power control for the CQICH and the fixed power relationship between the REQCH and CQICH.

The techniques described herein allow for derivation of uplink channel estimates for the UEs without consuming much (if any) additional resources. The UEs may send requests on the REQCH if and when these UEs desire to transmit data on the uplink. Resources for the REQCH are thus consumed only when needed. Furthermore, the UEs may send the REQCH from multiple antennas if MIMO operation .is supported and desired by the UEs. The transmission on the REQCH may be conveniently used as reference signals to derive channel estimates for the UEs. Since the REQCH is sent by the UEs in any case for uplink scheduling, little or no additional uplink overhead is incurred to "sound" the uplink MIMO channel and derive the channel estimates for these UEs. The use of the REQCH for sounding may be much more efficient than assigning dedicated resources to each UE for transmitting a broadband pilot. The RBQCH may be used as a broadband pilot whenever a UE desires to transmit data on the uplink using MIMO.

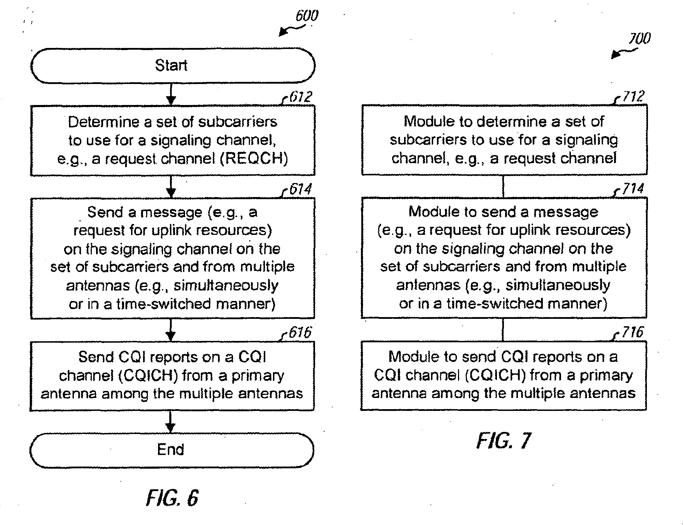

**FIG. 6** shows a design of a process 600 performed by a UE. A set of subcarriers to use for a signaling channel may be determined (block 612). The set of subcarriers may be distributed across the system bandwidth or across multiple subbands to support wideband channel estimation. A message may be sent on the signaling channel on the set of subcarriers and from multiple antennas at the UE (block 614). The signaling channel may be a REQCH, and the message may be a request for uplink resources. The Message may be sent from the multiple antennas either simultaneously or in a time-switched manner, from one antenna in each time interval.

The set of subcarriers for the signaling channel may include multiple data subcarriers and multiple pilot subcarriers. Message data may be sent on the multiple data subcarriers, e.g., in a first symbol period. Pilot may be sent on the multiple pilot subcarriers, e.g., in a second symbol period next to the first symbol period. The second symbol period may have the same or shorter duration than the first symbol period. Pilot may be sent on the pilot subcarriers and from the multiple antennas using FDM (e.g., as shown in FIGS. 5A and 5B) or using CDM (e.g., as shown in FIG. 5C).

The set of subcarriers for the signaling channel may be obtained in various manners. In one design, the set of subcarriers may comprise multiple subsets of subcarriers, one subset of subcarrier for each of antenna, e.g., as shown in FIG. 5B. The message may be sent from the multiple antennas on the multiple subsets of subcarriers in the same symbol period. The set of subcarriers may also comprise multiple clusters of subcarriers, with each cluster including at least one data subcarrier and at least one pilot subcarrier. Message data and pilot may be sent on each cluster of subcarriers from one antenna. In another design, the set of subcarriers may belong in multiple time frequency blocks, which may be distributed across the system bandwidth, e.g., as shown in FIG. 5C. The time frequency blocks may hop across the system bandwidth in different time intervals or slots.

CQI reports may be sent on a CQICH from a primary antenna among the multiple antennas (block 61.6). The transmit power of the CQICH may be adjusted via power control. The transmit power of the REQCH may be set at a predetermined offset from the transmit power of the CQICH.

**FIG. 7** shows a design of an apparatus 700 for a UE. Apparatus 700 includes means for determining a set of subcarriers to use for a signaling channel, e.g., a REQCH (module 712), means for sending a message (e.g., a request for uplink resources) on the signaling channel on the set of subcarriers and from multiple antennas at the UE (module 714), and means for sending CQI reports on a CQICH from a primary antenna among the multiple antennas (module 716). Modules 712 to 716 may comprise processors, electronics devices, hardware devices, electronics components, logical circuits, memories, etc., or any combination thereof.

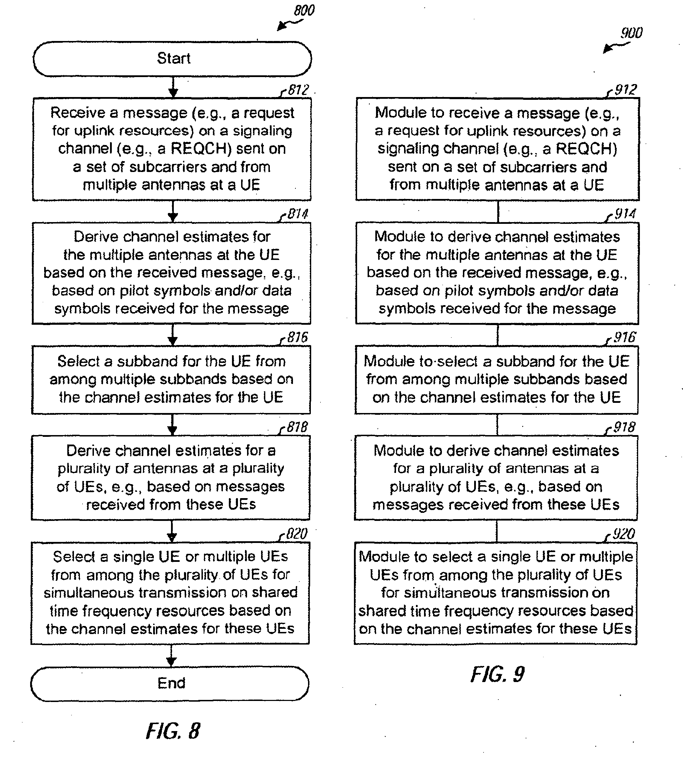

**FIG. 8** shows a design of a process 800 performed by a Node B. A message may be received on a signaling channel sent on a set of subcarriers and from multiple antennas at a UE (block 812). The signaling channel may be a REQCH, and the message may be a request for uplink resources. Channel estimates for the multiple antennas at the UE may be derived based on the received message, e.g., based on pilot symbols and/or data symbols received for the message (block 814).

The set of subcarriers for the signaling channel may comprise multiple data subcarriers and multiple pilot subcarriers. Coherent demodulation of the message may be performed by (i) deriving a first channel estimate based on received pilot symbols from the pilot subcarriers and (ii) demodulating the received data symbols from the data subcarriers based on the first channel estimate. Data symbols for the received message may be reconstructed. A. second channel estimates may then be derived based on the reconstructed data symbols and the received data symbols. The channel estimates for the multiple antennas at the UE may be derived based on the first and second channel estimates obtained from the received pilot symbols and the received data symbols, respectively.

For subband scheduling, a subband may be selected for the UE from among multiple available subbands based on the channel estimates for the UE (block 816). Time frequency resources in the selected subband may be assigned to the UE for uplink transmission. SNR may also be estimated based on the received message. At least one rate for uplink transmission may be selected based on the estimated SNR.

For MIMO scheduling, channel estimates for a plurality of antennas at a plurality of UEs may he derived, e.g., based on messages received from these UEs (block 818). A single UE or multiple UEs may be selected from among the plurality of UFs for simultaneous transmission on shared time frequency resources based on the channel estimates for these UEs (block 820). A single UE may be selected for transmission via one or more antennas, e.g., using antenna selection. Multiple UEs may be selected for simultaneous transmission via different antennas at these UEs. The result of block 820 may be multiple antennas at multiple UEs, multiple antennas at one UE, only one antenna at one UE, etc. The best selection may be dependent on the MIMO channels for all antennas at all UEs. It is thus possible that one antenna at one UE may provide the best link throughput for given time frequency resources at a given time instant. The MIMO scheduling may also be performed for transmit diversity schemes. In this case, the channel estimates for both antennas at the UEs may be used for UE selection.

**FIG. 9** shows a design of an apparatus 900 for a Node B. Apparatus 900 includes means for receiving a message (e.g., a request for uplink resources) on a signaling channel (e.g., a REQCH) sent on a set of subcarriers and from multiple antennas at a UE (module 912), means for deriving channel estimates for the multiple antennas at the UE based on the received message, e.g., based on pilot symbols and/or data symbols received for the message (module 914), means for selecting a subband for the UE from among multiple subbands based on the channel estimates for the UE (module 916), means for deriving channel estimates for a plurality of antennas at a plurality of UEs, e.g., based on messages received from these UEs (module 918), and means for selecting a single UE or multiple UEs from among the plurality of UEs for simultaneous transmission on shared time frequency resources based on the channel estimates for these UEs (module 920). Modules 912 to 920 may comprise processors, electronics devices, hardware devices, electronics components, logical circuits, memories, etc., or any combination thereof.

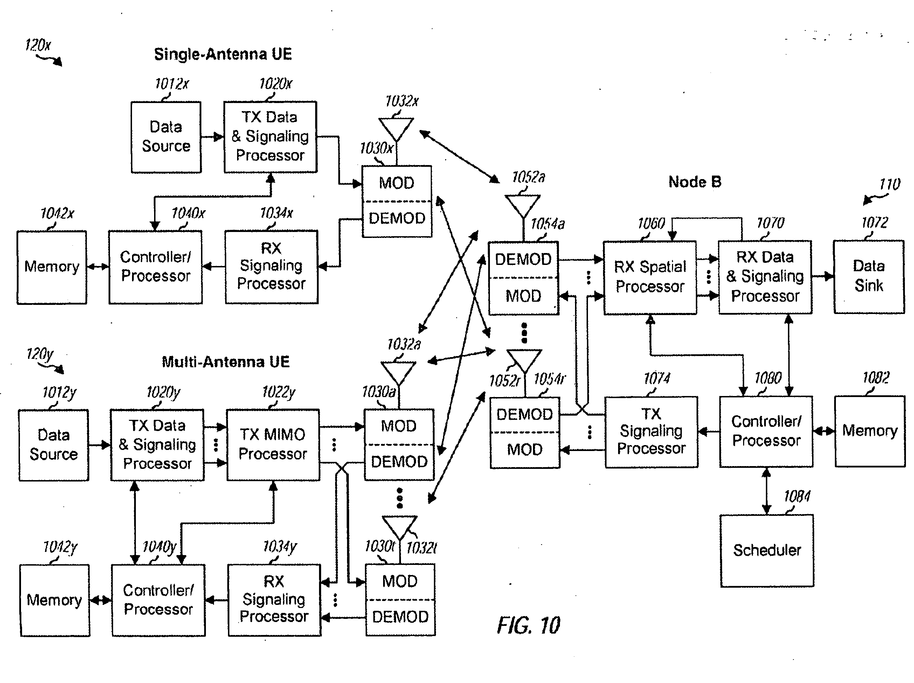

**FIG. 10** shows a block diagram of a design of one Node B 110 and two UEs 120x and 120y in system 100. In FIG. 10, UE 120x is equipped with a single antenna 1032x, UE 120y is equipped with multiple (T) antennas 1032a through 1032t, and node B 110 is equipped with multiple (R) antennas 1052a through 1052r. Each antenna may be a physical antenna or an antenna array. For simplicity, FIG. 10 shows only processing units for data and signaling transmission on the uplink and signaling transmission on the downlink.

At each UE 120, a transmit (TX) data and signaling processor 1020 may receive traffic data from a data source 1012, process (e.g., format, encode, interleave, and symbol map) the traffic data, and generate data symbols for traffic. Processor 1020 may also receive signaling data (egg., for the REQCH and CQICH) from a controller/processor 1.040, process the signaling data, and generate data symbols for signaling. Processor 1020 may also generate and multiplex pilot symbols with the data symbols. As used herein, a data symbol is a symbol for traffic or signaling, a pilot symbol is a symbol for pilot, and a symbol is typically a complex value. The data symboles and pilot symbols may be modulation symbols from a modulation scheme such as PSK or QAM. Pilot is data that is known *a priori* by both the UEs and Node B.

At UE 120y, a TX MIMO processor 1022y may perform transmitter spatial processing (e.g., direct MIMO mapping, preceding, etc.) on the data and pilot symbols. A data symbol may be sent from one antenna for direct MIMO mapping or from multiple antennas for precoding. Processor 1022y may provide T output symbol streams to T modulators (MODs) 1030a through 1030t. At UE 1.20x, processor 1.020x may provide a single output symbol stream to modulator 1030x. Each modulator 1030 may perform modulation (e.g., for SC-FDM, OFDM, etc.) on the output symbols to obtain output chips. Each modulator 1030 may further process (e.g., convert 10 analog, filter, amplify, and upconvert) its output chips and generate an uplink signal. At UE 1.20x, a single uplink signal from modulator 1030x may be transmitted from antenna 1032x. At UE 120y, T uplink signals from modulators 1030a trough 1030t may be transmitted from T antennas 1032a through 1032t, respectively.

At Node B 110, R antennas 1052a through 1052r receive the uplink signals from UEs 120x and 120y and possibly other UEs. Each antenna 1052 provides a received signal to a respective demodulator (DEMOD) 1054. Each demodulator 1054 may process (e.g., filter, amplify, downconvert, and digitize) its received signal to obtain samples. Each demodulator 1054 may also perform demodulation (e.g., for SC-FDM, OFDM, etc.) on the samples to obtain received symbols. A receive (RX) spatial processor 1060 may estimate the channel responses for different UEs based on received pilot symbols, perform MIMO/SIMO detection on received data symbols, and provide data symbol estimates. An RX data and signaling processor 1070 may process (e.g., symbol demap, deinterleave, and decode) the data symbol estimates, provide decoded traffic data to a data sink 1072, and provide decoded signaling data to a controller/processor 1.080.

Node B 110 may send traffic data and signalling data (e.g., grants of uplink resources, power control commands for the CQICH, etc.) to the UEs. The signaling data may be processed by a TX signaling processor 1074 and further processed by modulators 1054a through 1054r to generate R downlink signals, which may be sent via R antennas 1052a through 1052r. At each UE 120, the downlink signals from Node B 110 may be received by one or more antennas 1032, processed by one or more demodulators 1030, and further processed by an RX signaling processor 1034 to recover the signaling data sent by Node B 110.

Controllers/processors 1040x, 1040y, and 1080 may control the operation of various processing units at UEs 120x and 120y and Node B 110, respectively. Memories 1042x, 1042y, and 1082 may store data and program codes for UEs 120x and 120y and Node B 110, respectively. A scheduler 1084 may schedule UEs for transmission based on requests received from the UEs, channel estimates derived for the UEs, etc.

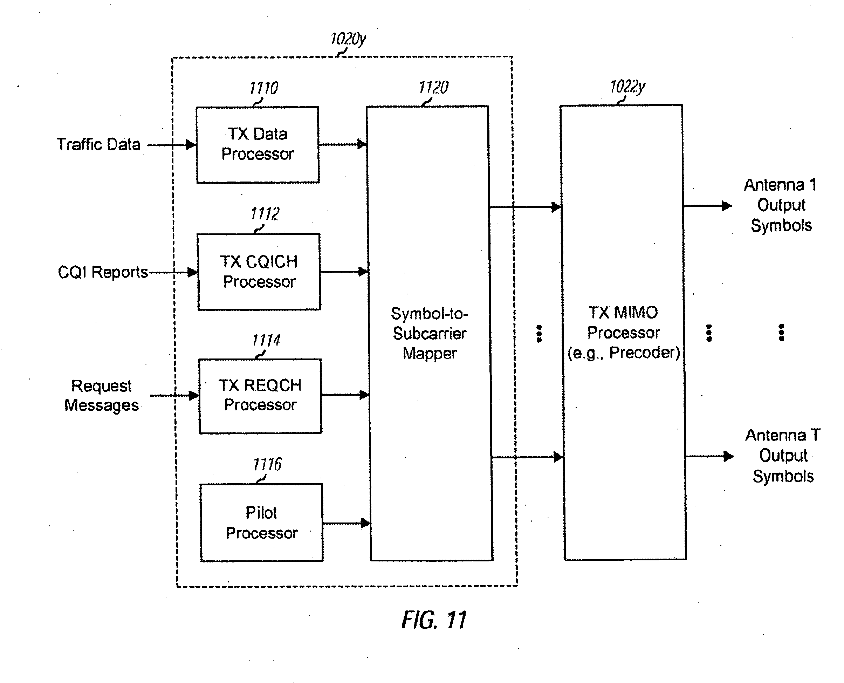

**FIG. 11** shows a block diagram of a design of TX data and signaling processor 1020y at multi-antenna UE 120y in FIG. 10. Within processor 1020y, a TX data processor 1110 may process traffic data and provide data symbols for traffic data. A TX CQICH processor 1112 may process CQI reports and provide data symbols for the CQICH A TX REQCH processor 1114 may process request messages and provide data symbols for the REQCH, A pilot processor 1116 may process pilot data and provide pilot symbols for traffic (e.g., as shown in FIG. 3A or 3B) and pilot symbols for the REQCH (e.g., as shown in FIGS. 5A, 5B or 5C).

A symbol-to-subcarrier mapper 1120 may receive the data and pilot symbols from processors 1110 through 1116 and may map these symbols to the proper subcarriers on the proper antennas in the proper symbol periods. Mupper 1120 may map data symbols to data subcarriers, map pilot symbols to pilot subcarriers, provide the mapped data symbols to the proper antenna(s) in each data symbol period, and provide the mapped pilot symbols to the proper antenna(s) in each pilot symbol period. For example, mapper 1120 may map data and pilot symbols for the REQCH as shown in FIG. 5A, 5B or 5C. Mapper 1120 may provide one or more streams of mapped symbols in each symbol period, e.g., depending on the number of available PAs. For example, mapper 1120 may provide (i) one mapped symbol stream to different antennas in different symbol periods of one PA is available or (ii) multiple mapped symbol streams to multiple antennas if multiple PAs are available.

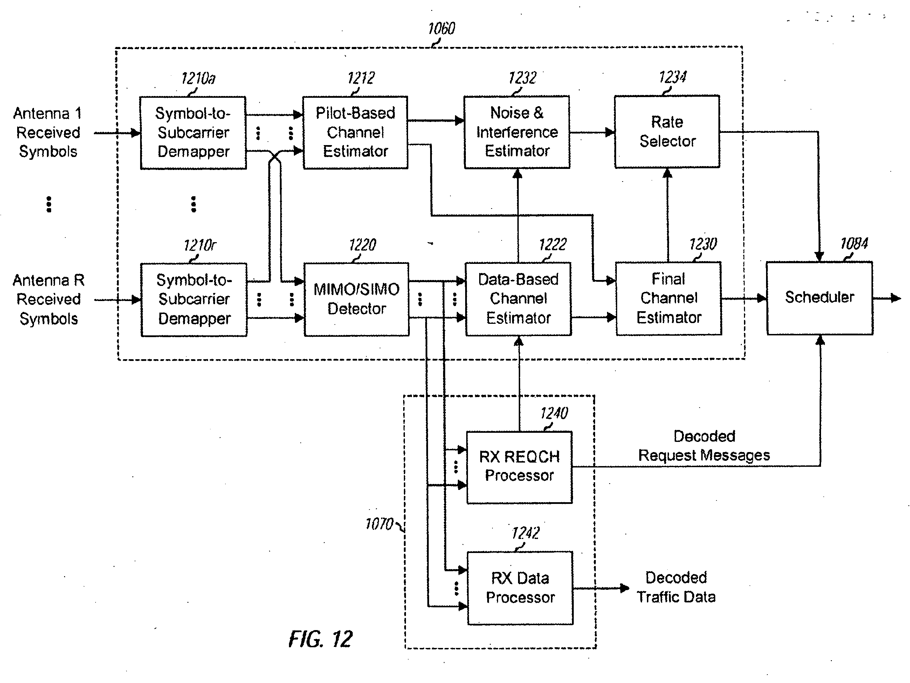

**FIG. 12** shows a block diagram of a design of RX spatial processor 1060 and. RX data and signaling processor 1070 at Node B 110 in FIG. 10. Within RX spatial processor 1060, received symbols from R demodulators 1054a through 1054r may be provided to R symbol-to-subcarrier demappers 1210a through 1210r, respectively. Each demapper 1210 may provide received pilot symbols from pilot subcarriers to a pilot-based channel estimator 1212 and provide received data symbols from data subcarriers to a MIMO/SIMO detector 1220. Channel estimator 1212 may derive channel gain estimates for the pilot subcarriers based on the received pilot symbols. The pilot subcarriers for the REQCH may be as shown in FIG. 5A, 5B or 5C. The pilot subcarriers for traffic data may be as shown in FIG. 3A or 3B. MIMO/SIMO detector 1220 may perform detection on the received data symbols with the channel gain estimates and provides data symbol estimates. For the REQCH, MIMO/SIMO detector 1220 may perform detection on the received data symbols in each cluster of subcarriers with a channel gain estimate for that cluster. For traffic data, MIMO/SIMO detector 1220 may perform MIMO/SIMO detection on the received data symbols from all R receive antennas based on minimum mean square error (MMSE), MMSE with successive interference cancellation (SIC), zero-forcing, or some other techniques.

Within RX data and signaling processor 1070, an RX REQCH processor 1240 may demodulate and decode the data symbol estimates for the REQCH and provide decoded request messages to scheduler 1084. Processor 1240 may also reconstruct data symbols for the REQCH based on the decoded request messages and provides the reconstructed data symbols to a data-based channel estimator 1222. An RX data processor 1242 may demodulate and decode the data symbol estimates for traffic and provide decoded traffic data to data sink 1072.

Channel estimator 1222 may derive channel gain estimates for the data subcarriers based on the reconstructed data symbols and the received data symbols. The data subcarriers for the REQCH may be as shown in FIG. 5A, 5B or 5C. A final channel estimator 1230 may receive the channel gain estimates for the pilot and data subcarriers from channel estimators 1212 and 1222 and may derive a channel estimate for each antenna at each UE transmitting on the REQCH. For each UE antenna, channel estimator 1230 may derive a channel impulse response estimate for that UE antenna based on the channel gain estimates for the pilot and/or data subcarriers, filter and/or threshold the channel taps of the channel impulse response estimate, and derive final channel gain estimates for the UE antenna for all or a subset of the K total subcarriers. Channel estimator 1230 may also derive the final channel gain estimates for each UE antenna for all or a subset of the K total subcarriers in other manners, e.g., by filtering or interpolating the channel gain estimates for the pilot and data subcarriers.

A noise and interference estimator 1232 may estimate noise and interference for each UE antenna based on the received pilot symbols from channel estimator 1212 and/or the received data symbols and the reconstructed data symbols from channel estimator 1222. A. rate selector 1234 may select a rate for each UE antenna based on the channel estimates and the noise and interference estimates.

Scheduler 1084 may receive the decoded request messages for the UEs and the channel estimates and rates for the antennas at these UEs. Scheduler 1084 may select UEs for SU-MIMO and/or MU-MIMO based on their channel estimates and rates. Scheduler 1084 may also perform subband scheduling based on the channel estimates and rates. Scheduler 1084 may provide a list of UEs scheduled for uplink transmission in each scheduling interval the uplink resources (e.g., time frequency blocks) assigned to the scheduled UEs, and the rates to use for uplink transmission by the scheduled UEs.

The techniques described herein may be implemented by various means. For example, these techniques may be implemented in hardware, firmware, software, or a combination thereof. For a hardware implementation, the processing units used to perform the techniques may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, electronic devices, other electronic units designed to perform the functions described herein, a computer, or a combination thereof.

For a firmware and/or software implementation, the techniques may be implemented with modules (e.g., procedures, functions, etc.) that perform the functions described herein. The firmware and/or software instructions may be stored in a memory (e.g., memory 1042x, 1042y or 1082 in FIG. 10) and executed by a processor (e.g., processor 1040x, 1040y or 1080). The memory may be implemented within the processor or external to the processor. The firmware and/or software instructions may also be stored in other processor-readable medium such as random access memory (RAM), read-only memory (ROM), nonvolatile random access memory (NVRAM), programmable read-only memory (PROM), electrically erasable PROM (EEPROM), FLASH memory, compact disc (CD), magnetic or optical data storage device, etc.

Further aspects of the invention:

In one aspect, an apparatus is described, which comprises a processor, which may be configured to determine a set of subcarriers to use for a signaling channel and to send a message on the signaling channel on the set of subcarriers and from multiple antennas and a memory coupled to the processor. Further, the signaling channel may be a request channel (REQCH) and the message may be a request for uplink resources. Further, the processor may be configured to send channel quality indicator (CQI) reports on a CQI channel (CQICH) from a primary antenna among the multiple antennas. Also, the processor may be configured to adjust transmit power of the CQICH via power control and to set transmit power of the REQCH at a predetermined offset from the transmit power of the CQICH. Yet in another aspect the processor may be configured to send the message from the multiple antennas in multiple time intervals, from one antenna in each time interval. Alternatively, the processor may be configured to send the message from the multiple antennas simultaneously in a time interval. In another aspect the set of subcarriers comprises multiple data subcarriers and multiple pilot subcarriers, and wherein the processor may be configured to send message data on the multiple data subcarriers and to send pilot on the multiple pilot subcarriers. Further, the processor may be configured to send the message data on the multiple data subcarriers in a first symbol period and to send the pilot on the multiple pilot subcarriers in a second symbol period next to the first symbol period. In an alternative aspect the processor may be configured to send the pilot on the multiple pilot subcarriers and from the multiple antennas using frequency division multiplexing (FDM). Yet in another aspect the processor may be configured to send the pilot on the multiple pilot subcarriers and from the multiple antennas using code division multiplexing (CDM). Also, the set of subcarriers may comprise multiple subsets of subcarriers, one subset of subcarriers for each of the multiple antennas, and wherein the processor may be configured to send the message from the multiple antennas on the multiple subsets of subcarriers in a symbol period. Alternatively, the set of subcarriers may comprise multiple clusters of subcarriers, each cluster comprising at least one data subcarrier and at least one pilot subcarrier, and wherein the processor may be configured to send message data and pilot on each cluster of subcarriers from one of the multiple antennas. Yet in another aspect the set of subcarriers may be distributed across system bandwidth. Also, the set of subcarriers may belong in at least two time frequency blocks distributed across system bandwidth. Further, the least two time frequency blocks may hop across the system bandwidth in different time intervals.

In a further aspect, a method is described, which comprises determining a set of subcarriers to use for a signaling channel and sending a message on the signaling channel on the set of subcarriers and from multiple antennas. Further, the set of subcarriers may comprise multiple data subcarriers and multiple pilot subcarriers, and wherein the sending the message on the signaling channel may comprise sending message data on the multiple data subcarriers, and sending pilot on the multiple pilot subcarriers. Further, the sending the pilot may comprise sending the pilot on the multiple pilot subcarriers and from the multiple antennas using code division multiplexing (CDM).

In a further aspect, an apparatus is described, which comprises means for determining a set of subcarriers to use for a signaling channel and means for sending a message on the signaling channel on the set of subcarriers and from multiple antennas. Also, the set of subcarriers may comprise multiple data subcarriers and multiple pilot subcarriers, and wherein the means for sending the message on the signaling channel may comprise means for sending message data on the multiple data subcarriers, and means for sending pilot on the multiple pilot subcarriers. Further, the means for sending the pilot may comprise means for sending the pilot on the multiple pilot subcarriers and from the multiple antennas using code division multiplexing (CDM).

In a further aspect, a processor-readable medium is described, which includes instructions stored thereon, comprising a first instruction set for determining a set of subcarriers to use for a signaling channel and a second instruction set for sending a message on the signaling channel on the set of subcarriers and from multiple antennas.

In a further aspect, an apparatus is described, which comprises a processor, which is configured to receive a message on a signaling channel sent on a set of subcarriers and from multiple antennas at a user equipment (UE), and to derive channel estimates for the multiple antennas at the UE based on the received message and a memory coupled to the processor. Further, the signaling channel may be a request channel (REQCH) and the message is a request for uplink resources. Also, the set of subcarriers may comprise multiple data subcarriers and multiple pilot subcarriers, and wherein the processor may be configured to receive pilot symbols on the multiple pilot subcarriers, to derive a first channel estimate based on the received pilot symbols, to receive data symbols on the multiple data subcarriers, and to demodulate the received data symbols based on the first channel estimate. Further, the processor may be configured to reconstruct data symbols for the received message, to derive a second channel estimate based on the reconstructed data symbols and the received data symbols, and to derive the channel estimates for the multiple antennas at the UE based on the first and second channel estimates. Yet in another aspect, the processor may be configured to derive channel estimates for a plurality of antennas at a plurality of UEs and to select at least two UEs from among the plurality of UEs for simultaneous transmission on shared time frequency resources based on the channel estimates for the plurality of antennas at the plurality of UEs. Alternatively, the processor may be configured to select a subband for the UE from among multiple subbands based on the channel estimates for the multiple antennas at the UE, and to assign time frequency resources in the selected subband to the UE for data transmission on uplink. Also, the processor may be configured to estimate signal-to-noise ratio (SNR) based on the received message and the channel estimates, and to select at least one rate for uplink transmission by the UE based on the estimated SNR.

In a further aspect, a method is described, which comprises receiving a message on a signaling channel sent on a set of subcarriers and from multiple antennas at a user equipment (UE) and deriving channel estimates for the multiple antennas at the UE based on the received message. The method may further comprise receiving pilot symbols on pilot subcarriers in the set of subcarriers; deriving a first channel estimate based on the received pilot symbols; receiving data symbols on data subcarriers in the set of subcarriers; and demodulating the received data symbols based on the first channel estimate. Further, the deriving the channel estimates for the multiple antennas at the UE may comprise deriving a second channel estimate based on the received data symbols and reconstructed data symbols for the received message, and deriving the channel estimates for the multiple antennas at the UE based on the first and second channel estimates. Alternatively, the method may comprise deriving channel estimates for a plurality of antennas at a plurality of UEs and selecting at least two UEs from among the plurality of UEs for simultaneous transmission on shared time frequency resources based on the channel estimates for the plurality of antennas at the plurality of UEs. Also, the method may comprise selecting a subband for the UE from among multiple subbands based on the channel estimates for the multiple antennas at the UE and assigning time frequency resources in the selected subband to the UE for data transmission on uplink. Yet in another aspect, the method may comprise estimating signal-to-noise ratio (SNR) based on the received message and selecting at least one rate for uplink transmission by the UE based on the estimated SNR.

In another aspect, an apparatus is described, which may comprise means for receiving a message on a signaling channel sent on a set of subcarriers and from multiple antennas at a user equipment (UE) and means for deriving channel estimates for the multiple antennas at the UE based on the received message. The apparatus may further comprise means for deriving channel estimates for a plurality of antennas at a plurality of UEs and means for selecting at least two UEs from among the plurality of UEs for simultaneous transmission on shared time frequency resources may be based on the channel estimates for the plurality of antennas at the plurality of UEs. Further, the apparatus may comprise means for selecting a subband for the UE from among multiple subbands based on the channel estimates for the multiple antennas at the UE and means for assigning time frequency resources in the selected subband to the UE for data transmission on uplink.

In a further aspect, a processor-readable medium is described, which includes instructions stored thereon, comprising a first instruction set for receiving a message on a signaling channel sent on a set of subcarriers and from multiple antennas at a user equipment (UE) and a second instruction set for deriving channel estimates for the multiple antennas at the UE based on the received message.

The previous description of the disclosure is provided to enable any person skilled in the art to make or use the disclosure. Various modifications to the disclosure will be readily apparent to those skilled in the art, and the generic principles defined herein may be applied to other variations without departing from the scope of the disclosure, as defined by the appended claims. Thus, the disclosure is not intended to be limited to the examples described herein but is to be accorded the widest scope consistent with the principles and novel features disclosed herein, as defined by the appended claims.

## Claims

1. An apparatus comprising:
means for receiving messages on a signaling channel sent on a set of subcarriers, wherein the signaling channel is a request channel, the set of subcarriers comprises multiple data subcarriers and multiple pilot subcarriers and the messages are requests for uplink resources and the set of subcarriers is distributed across system bandwidth and sent from multiple antennas (1032a, 1032t) at a plurality of user equipments (120, 120y),
wherein the means for receiving is configured to receive pilot symbols on the multiple pilot subcarriers and data symbols on the multiple data subcarriers;
means for demodulating the received pilot symbols and data symbols to estimate complex channel gains for the multiple pilot subcarriers and the multiple data subcarriers;
means for deriving channel estimates for the plurality of user equipments (120, 120y) that request uplink resources based on the complex channel gains;
means for selecting at least two user equipments (120, 120y) from among the plurality of user equipments (120, 120y) for simultaneous transmission on the requested uplink resource, wherein the selection is based on the amount of orthogonality between the channel estimates for a pair of antennas of the multiple antennas (1032a, 1032t) of the plurality of user equipments (120, 120y); and
means for assigning the requested uplink resource to the selected at least two user equipments (120, 120y) for simultaneous transmission.

2. The apparatus of claim 1, wherein the requested uplink resource is a shared time frequency resource.

3. The apparatus of claim 1, wherein the apparatus is a Node B (110).

4. A method for assigning uplink resources, the method comprising:
receiving messages on a signaling channel sent on a set of subcarriers,
wherein the signaling channel is a request channel and the messages are requests for uplink resources and the set of subcarriers is distributed across system bandwidth and sent from multiple antennas (1032a, 1032t) at a plurality of user equipments (120, 120y), wherein pilot symbols are received on pilot subcarriers in the set of subcarriers and data symbols are received on data subcarriers in the set of subcarriers;
demodulating the received pilot symbols and data symbols to estimate complex channel gains for the multiple pilot subcarriers and the multiple data subcarriers;
deriving channel estimates for the multiple antennas (1032a,1032t) at the plurality of user equipments (120, 120y) based on the complex channel gains;
selecting at least two user equipments (120, 120y) from among the plurality of user equipments (120, 120y) for simultaneous transmission on the requested uplink resource, wherein the selection is based on the amount of orthogonality between the channel estimates for a pair of antennas of the multiple antennas (1032a, 1032t) of the plurality of user equipments (120, 120y); and
assigning the requested uplink resource to the selected at least two user equipments (120, 120y) for simultaneous transmission.

5. A processor-readable medium including instructions stored thereon to perform the steps of the method according to claim 4.

## Patentansprüche

1. Eine Vorrichtung aufweisend:
Mittel zum Empfangen von Nachrichten auf einem Signalisierungskanal gesendet über einen Satz von Unterträgern,
wobei der Signalisierungskanal ein Anfragekanal ist, der Satz von Unterträgern mehrere Daten-Unterträger und mehrere Pilot-Unterträger aufweist und die Nachrichten Anfragen für Aufwärtsverbindungsressourcen sind und der Satz von Unterträgern über die Systembandweite verteilt ist und von mehreren Antennen (1032a, 1032t) an eine Vielzahl von Benutzergeräten (120, 120y) gesendet wird, wobei das Mittel zum Empfangen konfiguriert ist, um Pilotsymbole auf den mehreren Pilot-Unterträgern und Daten-Symbole auf den mehreren Daten-Unterträgern zu empfangen;
Mittel zum Demodulieren der empfangenen Pilot-Symbole und
Daten-Symbole, um komplexe Kanalverstärkungen für die mehreren Pilot-Unterträger und die mehreren Daten-Unterträger abzuschätzen;
Mittel zum Ableiten von Kanalabschätzungen für die Vielzahl von Benutzergeräten (120, 120y) die Aufwärtsverbindungsressourcen anfragen basierend auf den komplexen Kanalverstärkungen;
Mittel zum Auswählen von mindestens zwei Benutzergeräten (120, 120y) aus der Vielzahl von Benutzergeräten (120, 120y) für eine simultane Übertragung auf der angefragten Aufwärtsverbindungsressource, wobei das Auswählen auf dem Orthogonalitätsmaß zwischen den Kanalabschätzungen für ein Antennenpaar von den mehreren Antennen (1032a, 1032t) von der Vielzahl von Benutzergeräten (120, 120y) basiert; und
Mittel zum Zuordnen der angefragten Aufwärtsverbindungsressource zu den mindestens zwei ausgewählten Benutzergeräten (120, 120y) für eine simultane Übertragung.

2. Die Vorrichtung gemäß Anspruch 1, wobei die angefragte Aufwärtsverbindungsressource eine gemeinsame Zeit-Frequenz-Ressource ist.

3. Die Vorrichtung gemäß Anspruch 1, wobei die Vorrichtung eine Node B (110) ist.

4. Ein Verfahren zum Zuordnen von Aufwärtsverbindungsressourcen, das Verfahren aufweisend:
Empfangen von Nachrichten auf einem Signalisierungskanal gesendet über einen Satz von Unterträgern, wobei der Signalisierungskanal ein Anfragekanal ist und die Nachrichten Anfragen für Aufwärtsverbindungsressourcen sind und der Satz von Unterträgern über die Systembandweite verteilt ist und von mehreren Antennen (1032a, 1032t) an eine Vielzahl von Benutzergeräten (120, 120y) gesendet wird, wobei Pilotsymbole auf Pilot-Unterträgern in dem Satz von Unterträgern empfangen werden und Daten-Symbole auf Daten-Unterträgern in dem Satz von Unterträgern empfangen werden;
Demodulieren der empfangenen Pilot-Symbole und Daten-Symbole, um komplexe Kanalverstärkungen für die mehreren Pilot-Unterträger und die mehreren Daten-Unterträger abzuschätzen;
Ableiten von Kanalabschätzungen für die mehreren Antennen (1032a, 1032t) an der Vielzahl von Benutzergeräten (120, 120y) basierend auf den komplexen Kanalverstärkungen;
Auswählen von mindestens zwei Benutzergeräten (120, 120y) aus der Vielzahl von Benutzergeräten (120, 120y) für eine simultane Übertragung auf der angefragten Aufwärtsverbindungsressource,
wobei die Auswahl auf dem Orthogonalitätsmaß zwischen den Kanalabschätzungen für ein Antennenpaar von den mehreren Antennen (1032a, 1032t) von der Vielzahl von Benutzergeräten (120, 120y) basiert; und
Zuordnen der angefragten Aufwärtsverbindungsressource zu den mindestens zwei ausgewählten Benutzergeräten (120, 120y) für eine simultane Übertragung.

5. Ein prozessorlesbares Medium beinhaltend darauf gespeicherte Anweisungen, um die Schritte des Verfahrens gemäß Anspruch 4 auszuführen.

## Revendications

1. Un dispositif comprenant :
des moyens de réception de messages sur un canal de signalisation envoyés sur un ensemble de sous-porteuses,
le canal de signalisation étant un canal de requête,
l'ensemble de sous-porteuses comprenant des sous-porteuses de données multiples et des sous-porteuses pilote multiples et les messages étant des requêtes pour des ressources de liaison montante et l'ensemble des sous-porteuses étant distribué sur l'étendue de la largeur de bande du système et envoyé à partir d'antennes multiples (1032a, 1032t) sur une pluralité d'équipements utilisateur (120, 120y), les moyens de réception étant configurés pour recevoir des symboles pilote sur les sous-porteuses pilote multiples et des symboles de données sur les sous-porteuses de données multiples ;
des moyens de démodulation des symboles pilote et des symboles de données reçus pour estimer des gains de canal complexes pour les sous-porteuses pilote multiples et les sous-porteuses de données multiples ;
des moyens de dérivation d'estimées de canal pour la pluralité d'équipements utilisateur (120, 120y) qui requièrent des ressources de liaison montante sur la base des gains de canal complexes ;
des moyens de sélection d'au moins deux équipements utilisateur (120, 120y) parmi la pluralité d'équipements utilisateur (120, 120y) pour émission simultanée sur la ressource de liaison montante requise, la sélection étant basée sur l'importance de l'orthogonalité entre les estimées de canal pour une paire d'antennes des antennes multiples (1032a, 1032t) de la pluralité d'équipements utilisateur (120, 120y) ; et
des moyens d'attribution de la ressource de liaison montante requise aux au moins deux équipements utilisateur sélectionnés (120, 120y) pour émission simultanée.

2. Le dispositif de la revendication 1, dans lequel la ressource de liaison montante requise est une ressource fréquentielle en temps partagé.

3. Le dispositif de la revendication 1, dans lequel le dispositif est un Noeud B (110).

4. Un procédé d'attribution de ressources de liaison montante, le procédé comprenant :
la réception de messages sur un canal de signalisation envoyés sur un ensemble de sous-porteuses, le canal de signalisation étant un canal de requête et les messages étant des requêtes pour des ressources de liaison montante et l'ensemble des sous-porteuses étant distribué sur l'étendue de la largeur de bande du système et envoyé à partir d'antennes multiples (1032a, 1032t) d'une pluralité d'équipements utilisateur (120, 120y), les symboles pilote étant reçus sur des sous-porteuses pilote de l'ensemble de sous-porteuses et les symboles de données étant reçus sur des sous-porteuses de données de l'ensemble de sous-porteuses ;
la démodulation des symboles de données et des symboles pilote reçus pour estimer des gains de canal complexes pour les sous-porteuses pilote multiples et les sous-porteuses de données multiples ;
la dérivation d'estimées de canal pour les antennes multiples (1032a, 1032t) sur la pluralité d'équipements utilisateur (120, 120y) sur la base des gains de canal complexes ;
la sélection d'au moins deux équipements utilisateur (120, 120y) parmi la pluralité d'équipements utilisateur (120, 120y) pour émission simultanée sur la ressource de liaison montante requise, la sélection étant basée sur l'importance de l'orthogonalité entre les estimées de canal pour une paire d'antennes des antennes multiples (1032a, 1032t) de la pluralité d'équipements utilisateur (120, 120y) ; et
l'attribution de la ressource de liaison montante requise aux au moins deux équipements utilisateur sélectionnés (120, 120y) pour émission simultanée.

5. Un support lisible par processeur comprenant des instructions stockées dessus pour mettre en oeuvre les étapes du procédé selon la revendication 4.
